# EUROPEAN PATENT APPLICATION

(11) **EP 4 823 098 A1**
(43) Date of publication of application: **14.10.2026**
(21) Application number: 26152846.7
(22) Date of filing: 20.01.2026
(51) Int. Cl.: H04N 21/43, G06F 40/58, H04N 21/81

(54) **MULTILINGUAL MULTIMEDIA TRANSLATION WITH SYNCHRONIZED AUDIO AND BODY GESTURES**

(30) Priority: 11.03.2025 US 202519075907
(71) Applicant: Disney Enterprises, Inc., Burbank, CA 91521 (US)
(72) Inventor: Nguyen, Duy, Burbank, 91521 (US)
(74) Representative: 2pi Patent Consulting GbR

(57) **Abstract**

Multilingual multimedia translation by generating a synchronized multimedia asset based on a multimedia asset that is translated into a different language. The multilingual multimedia translation segments the multimedia asset into an audio segment and a video segment. The multilingual translation uses the audio segment to generate a translated audio segment. The multilingual translation may use the video segment identify body gestures of individuals in the video segment, generate translated body gestures, and generate translated lip movements. Using the translated audio segment and any translated lip movements or translated body gestures, the multilingual translation generates a synchronized multimedia asset.

## Description

### CROSS-REFERENCE TO RELATED APPLICATIONS

This application claims benefit of and priority to United States patent application serial number 19/075,907, entitled "Multilingual Multimedia Translation with Synchronized Audio and Body Gestures", filed March 11, 2025. The aforementioned related patent application is herein incorporated by reference in its entirety.

### BACKGROUND

In video content, language barriers pose a significant challenge to global communication and understanding. Traditional video translation methods primarily focus on verbal content, often neglecting the crucial aspects of non-verbal communication such as body language and gestures.

Current methods do not capture the nuances and cultural contexts embedded in body language, which are integral to effective communication. This can lead to misunderstandings or misinterpretations of the original content. Existing systems often provide translations in the form of subtitles or dubbed audio that are not synchronized with the speakers' body gestures and facial expressions, leading to a disjointed and less engaging viewer experience.

Content creators face difficulties in making their video content accessible and relatable to a global audience, as they must consider not only language barriers but also cultural differences in non-verbal communication.

The problem of multilingual video translation is typically solved using separate technologies for audio and subtitle translation. For example, subtitles and dubbed audio tracks are used to translate spoken language, but these solutions often lack synchronization with body gestures and facial expressions, leading to a disjointed viewer experience.

### BRIEF DESCRIPTION OF THE DRAWINGS

So that the manner in which the above-recited aspects are attained can be understood in detail, a more particular description of embodiments described herein, briefly summarized above, may be provided by reference to the appended drawings.

It is to be noted, however, that the appended drawings illustrate typical embodiments and are therefore not to be considered limiting; other equally effective embodiments are contemplated.
Figure 1 depicts a translation system for generating a synchronized multimedia asset, according to one embodiment.
Figure 2 depicts a flowchart for generating the synchronized multimedia asset, according to one embodiment.
Figure 3 depicts a workflow for implementing the flowchart described in Figure 2, according to one embodiment.
Figure 4 depicts a flowchart for identifying a difference between a first gesture and a translated gesture, according to one embodiment.
Figure 5 depicts a workflow for implementing the flowchart described in Figure 4, according to one embodiment.
Figure 6 depicts a flowchart for generating translated lip movements, according to one embodiment.

### DETAILED DESCRIPTION

The present disclosure addresses the challenge of providing translated media synchronized with a speaker's body gesture and facial expressions by supplying a translation system that not only translates the spoken words in videos into multiple languages, but also ensures that the non-verbal aspects, such as gestures and facial expressions, are accurately synchronized and culturally adapted. This approach aims to make video content universally accessible and relatable.

The present disclosure depicts a translation system that segments a multimedia asset into a video segment and audio segment. The translation system synchronizes translated audio and with body gestures in the video segment, ensuring that both verbal and non-verbal communication are accurately conveyed across different languages. For example, in the video segment an individual may say "there is an eagle on that house" and the individual points as he says, "that house." When the phrase, "there is an eagle on that house," is translated to a target language, the order of the words may be moved around, so when the individual points, the words do not match the emphasis of the words "that house" in the target language. The translation system synchronizes the translated audio with the pointing gesture to maintain the desired emphasis.

In another exemplary embodiment, the translation system generates a translated gesture of an initial gesture made by an individual in a multimedia asset based on a culture related to a target language. For example, the individual nods his head to express he agrees with a question asked to him. When the translation system translates the multimedia asset, the translation system checks if the initial gesture has the same meaning in a culture related to the target language. If the initial gesture has a different meaning, the translation system generates the translated gesture to match the meaning of the initial gesture in the target language. The translation system uses a generated translated gesture to replace the initial gesture in the multimedia asset. In an exemplary embodiment of the present disclosure, the translation system generates and synchronizes translated lip movements with the translated audio, which makes the translated content feel more natural, enhancing user experience.

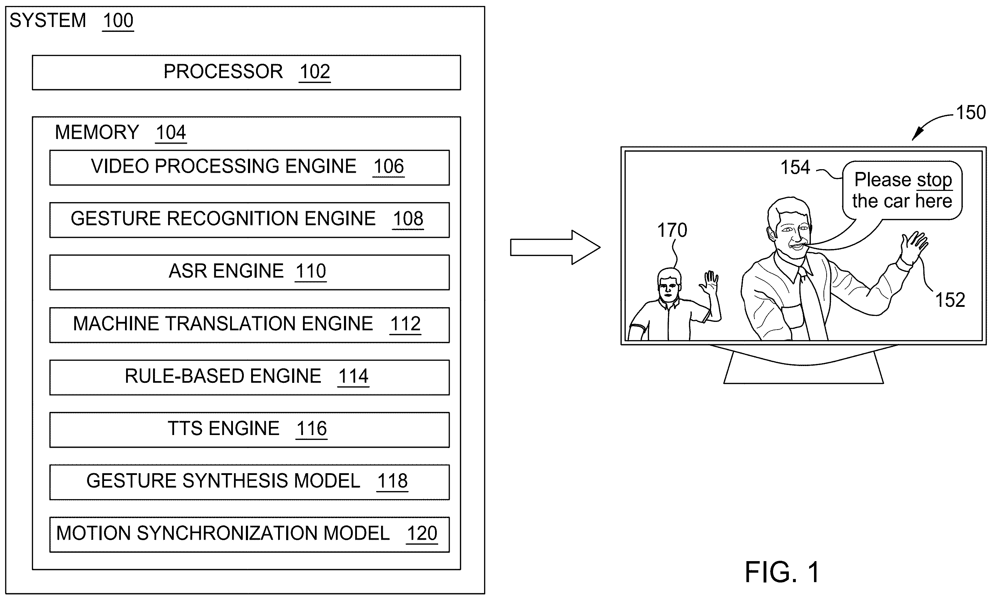

Figure 1 depicts a translation system, system 100, for generating a synchronized multimedia asset. The system 100 includes a processor 102 and memory 104. The processor 102 represents any number of processing elements, which can each include any number of processing cores. The memory 104 can include volatile memory elements, non-volatile memory elements, and any combinations thereof. The memory 104 includes a video processing engine 106, a gesture recognition engine 108, an Automatic Speech Recognition (ASR) engine 110, a machine translation engine 112, a rule-based engine 114, a Text-To-Speech (TTS) engine 116, a gesture synthesis model 118, and a motion synchronization model 120. There can be different software applications or software modules in the same software application.

The video processing engine 106 segments a multimedia asset into a video segment and an audio segment. The multimedia asset may be an .mp4, .avi, or any other video file format. The multimedia asset may have metadata that describes, but is not limited to, a language, a culture, an actor, a genre, or a duration related to the multimedia asset. As the video processing engine 106 segments the multimedia asset, the video segment created may be .mp4, .avi, or any other video file format. In an exemplary embodiment, the video processing engine 106 creates a plurality of video segments that are each different portions of the whole multimedia asset. The audio segment created by the video processing engine 106 may be a .mp3, .wav, or any other audio file format. In an exemplary embodiment, the video processing engine 106 creates a plurality of audio segments that are each different portions of the whole multimedia asset.

The gesture recognition engine 108 captures gestures made by an individual depicted in the video segment from the multimedia asset. In one embodiment, the gesture recognition engine 108 uses computer vision techniques along with databases of gestures to determine the gestures of the individual depicted in the multimedia asset. For example, the video segment may depict the individual nodding his head yes in response to a question. The gesture recognition engine 108 could identify the individual is nodding his head up and down. In another example, the video segment may depict an individual waving his hand to say goodbye. The gesture recognition engine 108 could identify the individual is moving his hand side-to-side. In an exemplary embodiment, the gesture recognition engine 108 captures gestures of the individual in each of the plurality of video segments. In an exemplary embodiment, the gesture recognition engine 108 captures gestures of different individuals in each of the plurality of video segments.

The ASR engine 110 generates a text transcription of an audio segment through systems such as DeepSpeech. In an exemplary embodiment, the ASR engine 110 receives the audio segment created by the video processing engine 106. The ASR engine 110 can generate a text transcript of the audio segment from the video processing engine 106. In one embodiment, the ASR engine 110 receives a language input stating a language of the audio segment. Using the language input, the ASR engine 110 can determine the language to use for generating the transcript of the audio segment. In an exemplary embodiment, the ASR engine 110 receives an acoustic model that indicates a specific dialect or accent of the language. The ASR engine 110 can then use the specified dialect or accent of the language to generate the text transcript of the audio segment. In an exemplary embodiment, the ASR engine 110 receives information about an individual speaking in the audio segment such as the individual's age, gender, etc.

The machine translation engine 112 receives a text transcript in one language and translates the text transcript into another language. The machine translation engine 112 receives as an input a first language, an untranslated text transcript, and a target language to translate the text transcript into. In an exemplary embodiment, the machine translation engine 112 receives the text transcript generated by the ASR engine 110 to translate. The machine translation engine 112 outputs a translated text transcript in the target language.

The rule-based engine 114 checks a text transcript of an audio segment or a body gesture in a video segment for language accuracy, cultural accuracy, or to determine a meaning of the body gesture. The rule-based engine 114 receives as an input the text transcript or the body gesture, along with a target language. In exemplary embodiment, the target language used in the rule-based engine 114 is the same target language for the machine translation engine 112. In an exemplary embodiment, the rule-based engine 114 receives as an input a culture related to the text transcript or the body gesture. In an exemplary embodiment, the rule-based engine 114 receives as an input a culture related to the text transcript or the body gesture and a culture related to the multimedia asset. In an exemplary embodiment, instead of receiving it as an input, the rule-based engine 114 determines the culture related to the text transcript or the body gesture. In one embodiment, the rule-based engine 114 accesses a repository of predefined rules, cultural norms, or gestures related to the target language for checking language accuracy, cultural accuracy, or determining a meaning of the body gesture.

In an exemplary embodiment, the rule-based engine 114 receives the translated text transcript from the machine translation engine 112 and a target language. The rule-based engine 114 accesses predefined rules about the target language such as diacritics used for letters in the target language or grammar for the target language. In an exemplary embodiment, the rule-based engine 114 receives a gesture from the gestures found by the gesture recognition engine 108 and a culture related to the gesture of a particular country or region. The ruled-based engine 114 accesses gestures related to the country or region to determine a meaning of the gesture found by the gesture recognition engine 108. For example, if the gesture was an individual shaking his head side-to-side, the rule-based engine 114 would check gestures related to one country and determine that an individual shaking his head side-to-side means "Yes" but in another country the same gesture means "No."

The TTS engine 116 generates audio using a text transcript. In an exemplary embodiment, the TTS engine 116 receives as an input the translated text transcript checked by the rule-based engine 114. The TTS engine 116 inputs the translated transcript into a generative machine learning (ML) model to generate a translated audio segment. In an exemplary embodiment, the TTS engine 116 inputs the translated transcript into a generative ML model that is trained with a voice of the individual from the original audio segment to generate the translated audio segment. In an exemplary embodiment, the TTS engine 116 receives as an input the translated text transcript created by the machine translation engine 112.

The gesture synthesis model 118 generates a translated gesture, using methods such as generative adversarial networks (GANs) or variational autoencoders (VAEs), based on an original gesture. In an exemplary embodiment, the gesture synthesis model 118 receives an original gesture from the gesture recognition engine 108, a meaning of the original gesture in an original culture, and a meaning of the original gesture in a culture related to a target language from the rule-based engine 114. The gesture synthesis model 118 checks to see if the original gesture has the same meaning between the original culture and the culture related to the target language. If the meanings are the same, the gesture synthesis model 118 outputs the original gesture. If the meanings are different, the gesture synthesis model 118 generates a translated gesture. The translated gesture has a meaning equivalent to the meaning of the original gesture but is depicted in the culture related to the target language. In an exemplary embodiment, the gesture synthesis model 118 utilizes a trained ML model to generate the translated gesture based on a gesture. In an exemplary embodiment, the individual speaking in the original audio segment is not the same person depicting the gesture in the video segment. For example, a first person depicted in the video segment may say "Goodbye" and a second person depicted in the video segment may make a waving gesture to respond to the first person's statement. The TTS engine 116 would translate the audio of the first person and the gesture synthesis model 118 may generate a translated gesture for the second person's gesture.

The motion synchronization model 120 generates a synchronized multimedia asset translated content with a video segment through systems such as First Order Motion Model. In an exemplary embodiment, the motion synchronization model 120 generates the synchronized multimedia asset using a translated audio segment and a video segment. For example, the motion synchronization model 120 may receive the translated audio segment from the TTS engine 116, a gesture identified by the gesture recognition engine 108, and the video segment and the original audio segment from the video processing engine 106. The motion synchronization model 120 can determine a temporal alignment between the original audio segment and the identified gesture from the gesture recognition engine 108. The motion synchronization model 120 uses the temporal alignment to synchronize the gesture in the video segment with the translated audio segment to generate the synchronized multimedia asset. In another exemplary embodiment, the motion synchronization model 120 may receive the translated gesture from the gesture synthesis model 118 and the video segment from the video processing engine 106. The motion synchronization model 120 can replace a gesture in a portion of the video segment with the translated gesture.

The user interface 150 receives and displays a multimedia asset. In exemplary embodiment, when a user wants to watch a multimedia asset, the user interface 150 can receive the multimedia asset depicting a first gesture 152 and an output phrase 154. For example, the multimedia asset may depict the first gesture 152 of an individual with his hand up and the individual saying the output phrase 154, "please stop the car here" in English. In an exemplary embodiment, the user wants to watch the multimedia asset in a target language. As part of translating the multimedia asset into the target language, an original audio segment of the multimedia asset is translated into the target language. The translated audio segment of the multimedia asset may not sync with gestures in a video segment of the multimedia asset. For example, using the output phrase 154 from before, "please stop the car here," the phrase may be said in a different order in the target language such as "stop the car here, please." By changing the order of the words in the output phrase 154, the gestures of the individual saying the output phrase 154 in the video segment will not emphasize the correct portion of the output phrase 154 (i.e., the translated audio and the gesture are no longer aligned temporally). In an exemplary embodiment, the motion synchronization model 120 determines a temporal alignment between the original audio segment and the gesture of the individual in the video segment by linking the gesture of the individual in the video segment with a syllable, word, or phrase in the original audio segment. The motion synchronization model 120 determines a temporal alignment by determining a time that the gesture occurs in the video segment and determining the word or phrase said at that time in the audio segment. By finding the temporal alignment between the original audio segment and the gesture, the motion synchronization model 120 can generate a synchronized multimedia asset with the translated audio segment and the gesture matching the linked syllable, word, or phrase. Then, the synchronized multimedia asset is sent to the user interface 150 for the user to watch in the target language. Using the example above, the first gesture 152, with the individual having his hand up, would be the same gesture as the gesture in the video segment from the multimedia asset, but the gesture would be depicted at a different time in the video to temporally align with the word "stop." Further, the phrase output 154 changes from "please stop the car here" in English to "stop the car here, please" in the target language.

Depending on the target language, the gestures of the individual in the video segment may not match the meaning of the translated audio segment. For example, if the individual is depicted as nodding his head to say "Yes," in the target language the gesture to say "Yes" may be the individual shaking his head side-to-side. In order to correct this issue, the gesture of the individual in the video segment would be replaced. In an exemplary embodiment, the multimedia asset is translated to a target language and using the gesture synthesis model 118 generates a translated gesture is generated that matches the meaning of the first gesture 152 in the target language. The motion synchronization model 120 synchronizes the translated gesture with the translated audio and the remaining portion of the video segment depicting the first gesture 152 to create a synchronized multimedia asset. Then, the synchronized multimedia asset is sent to the user interface 150 for the user to watch in the target language. This results in the first gesture 152 being replaced with the translated gesture and the output phrase 154 being replaced with the translated audio.

In an exemplary embodiment, instead of replacing the first gesture 152 with a translated gesture, the multimedia asset may depict an avatar 170 performing the translated gestures. For example, the avatar 170 may depict sign language for translated audio or translated gestures in the target language. In an exemplary embodiment, the avatar 170 is created using a generative ML model to depict sign language corresponding to the translated audio or translated gestures in the target language. In an exemplary embodiment, the motion synchronization model 120 synchronizes the translated audio with the avatar 170 and the translated gestures to generate the synchronized multimedia asset.

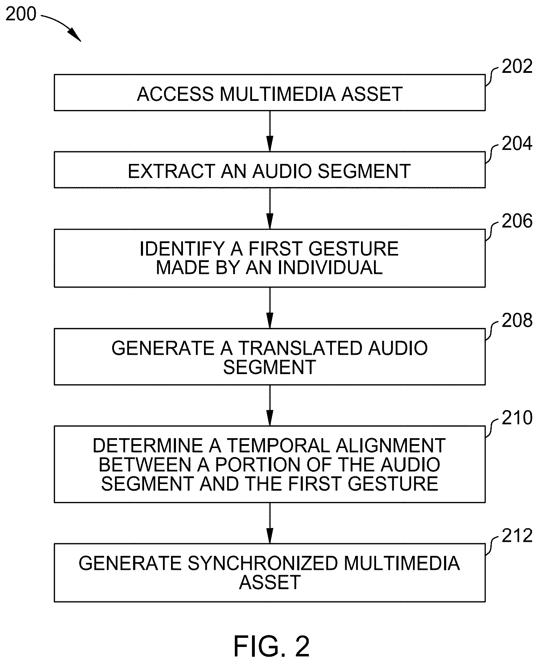

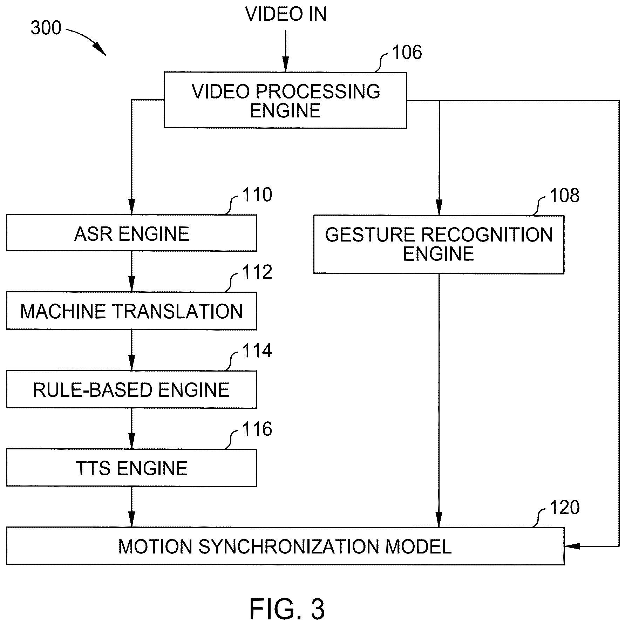

For clarity, the flowchart in Figure 2 is discussed in tandem with the workflow illustrated in Figure 3. Figure 2 depicts a flowchart for generating the synchronized multimedia asset. At block 202 of method 200, the video processing engine 106 receives as an input a multimedia asset to be translated. The video processing engine 106 segments the multimedia asset into a video segment and an audio segment at block 204. As shown in method 300, the video segment is output from the video processing engine 106 to the gesture recognition engine 108. The audio segment is output from the video processing engine 106 to the ASR engine 110.

At block 206, the gesture recognition engine 108 identifies the first gesture 152 made by an individual depicted in the video segment. As described above, the gesture recognition engine 108 uses computer vision techniques to identify the first gesture 152 made by the individual. In an exemplary embodiment, the gesture recognition engine 108 outputs the identified gesture to the motion synchronization model 120. For example, the gesture recognition engine 108 may receive a video segment that depicts an individual moving his hand side-to-side. The gesture recognition engine 108 identifies the individual is making a waving gesture.

At block 208, the TTS engine 116 generates a translated audio segment, such as a text transcription of the audio segment generated by the video processing engine 106. In an exemplary embodiment, the ASR engine 110 outputs the generated text transcription to the machine translation engine 112. The machine translation engine 112 translates the generated text transcription into a target language that is provided as an input to the machine translation engine 112. In an exemplary embodiment, the machine translation engine 112 outputs the translated text transcription to the rule-based engine 114. The rule-based engine 114 checks the translated text transcription with predefined rules related to the target language such as grammar and predefined rules related to a culture input related to the translated text transcription such as a dialect or accent related to the culture. The rule-based engine 114 outputs the translated text transcription with any modifications based on the predefined rules to the TTS engine 116. The TTS engine 116 uses the translated text transcription to generate the translated audio segment.

At block 210, the system 100 determines a temporal alignment between a portion of an audio segment and an identified gesture. In an exemplary embodiment, the motion synchronization model 120 receives the audio segment from the video processing engine 106 and the gesture identified by the gesture recognition engine 108. For example, the motion synchronization model 120 receives an audio segment of an individual saying, "I would like that slice of pizza" and an identified gesture being the individual pointing. In another example, the motion synchronization model 120 receives an audio segment of an individual saying, "here is your change" and an identified gesture being an individual extending his arm out with money in his palm. The motion synchronization model 120 determines a temporal alignment between the timing of the audio segment and the timing of the identified gesture. In an exemplary embodiment, the motion synchronization model 120 determines a temporal alignment between the identified gesture and a syllable, word, or phrase in the audio segment. Using the example of the individual pointing, the motion synchronization model 120 determines a temporal alignment between the individual saying, "I would like that slice of pizza," and when the individual makes the pointing gesture. In this example, the individual the temporal alignment is between when the individual begins pointing and when the individual says the word "that." Using the example of the individual extending his arm, the motion synchronization model 120 determines a temporal alignment between the individual saying, "here is your change," and when the individual extends his arm. In this example, the temporal alignment is between when the individual begins extending his arm and when the individual says the word "here."

At block 212, the system 100 generates a synchronized multimedia asset. In an exemplary embodiment the motion synchronization model 120 receives the video segment from the video processing engine 106, the gesture identified by the gesture recognition engine 108, and the translated audio segment generated by the TTS engine 116. As the audio segment is translated into the target language, the order of the words may be rearranged such that the intended emphasis from the identified gesture does not match the timing of the translated audio segment. To fix the desync between the identified gesture and the translated audio segment, the motion synchronization model 120 uses the timing determined in block 210 to synchronize the timing of the translated audio segment with the gesture depicted in the video segment by temporally aligning the translated audio segment with the gesture depicted in the video segment such that the gesture emphasizes the same word in the translated audio segment as the gesture did in the original audio segment. By temporally aligning the translated audio segment with the gesture depicted in the video segment, the motion synchronization model 120 can generate the synchronized multimedia asset. Using the example of the individual pointing, the motion synchronization model 120 determines the translated audio segment for the phrase, "I would like that slice of pizza" is desynced with the pointing gesture because the pointing gesture would emphasize "would" in the translated audio segment. The motion synchronization model 120 uses the temporal alignment from block 210 to synchronize the translated audio segment with the pointing gesture such that the pointing gesture emphasizes the word "that" in the translated audio segment. In the synchronized multimedia asset, the pointing gesture is temporally aligned with the word "that" in the translated audio segment of the phrase "I would like that slice of pizza." The motion synchronization model 120 bases the synchronization on the word in a phrase to when a gesture happened in the original audio segment. In this example, the motion synchronization model 120 has the temporal alignment that correlates the word "that" with the pointing gesture, so the motion synchronization model 120 synchronizes the translated audio segment to have the translated word for "that" align with the pointing gesture. Using the example of the individual extending his arm, the motion synchronization model 120 determines the translated audio segment for the phrase "here is your change" is desynced with the arm extending gesture because the arm extending gesture would emphasize "your" in the translated audio segment. The motion synchronization model 120 uses the temporal alignment from block 210 to synchronize the translated audio segment with the arm extending gesture such that the arm extending gesture emphasizes the word "here" in the translated audio segment. In the synchronized multimedia asset, the arm extending gesture is temporally aligned with the word "your" in the translated audio segment of the phrase "here is your change." In an exemplary embodiment, the synchronized multimedia asset has the same video as the multimedia asset input to the video processing engine 106 with translated audio from a target language.

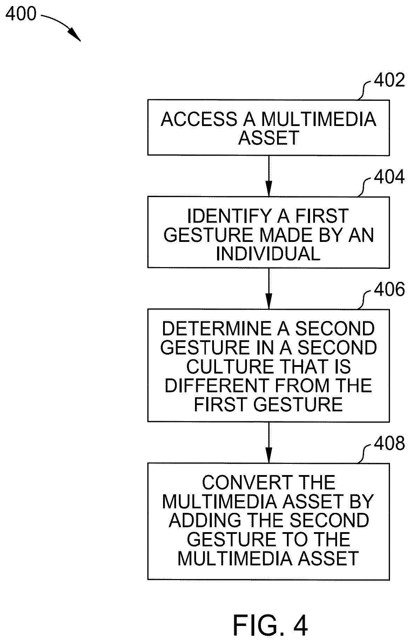

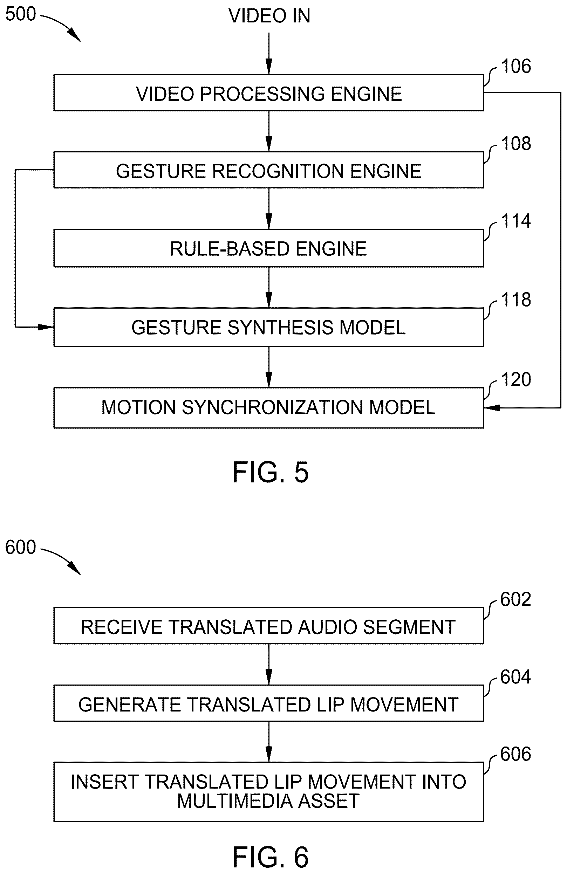

For clarity, the flowchart in Figure 4 is discussed in tandem with the workflow illustrated in Figure 5. Figure 4 depicts a flowchart for identifying a difference between meanings of a first gesture in two different cultures. In one embodiment, the method starts at block 402 where the video processing engine 106 accesses a multimedia asset. In one embodiment, the method 400 is performed after block 206 of the method 200. That is, the method 400 can be performed along with the gesture/translated audio synchronization techniques described in Figure 2 and the block 404 would be performed after block 206 instead of method 400 starting with block 402. However, in other embodiments, the method 400 may be a standalone method that is performed when converting a media presentation between two different cultures that have different gestures for the same meaning. This may include performing an audio translation (if the cultures have different languages) or the two cultures may share the same language in which case the audio is not translated, but the gestures are.

At block 404, the gesture recognition engine 108 identifies a first gesture made by an individual. As shown in Figure 5, the video processing engine 106 receives as input a multimedia asset. The video processing engine 106 segments the multimedia asset into a video segment and an audio segment. In an exemplary embodiment, the video processing engine 106 outputs the video segment to the gesture recognition engine 108. The gesture recognition engine 108 uses computer vision techniques, such as pose estimation, facial tracking, hand gesture detection, or a combination thereof, to determine the first gesture 152 depicted by an individual in the video segment. The method 400 identifies a meaning of the first gesture 152 in an original culture corresponding to the original language of the audio compared to the meaning of the first gesture 152 in a culture related to a target language. In an exemplary embodiment, the gesture recognition engine 108 outputs the first gesture 152 to the rule-based engine 114 to determine the meaning of the first gesture 152 in the culture corresponding to the original language. The rule-based engine 114 determines the meaning for the first gesture 152 in the original culture by identifying predefined cultural norms based on the original culture. For example, the rule-based engine 114 may receive a gesture of an individual shaking his head from the gesture recognition engine 108 along with an original language. The rule-based engine 114 identifies a culture related to the original language and determines that when an individual shakes their head, the gesture means the individual is disagreeing.

At block 406, the system 100 determines a second gesture in a second culture that is different from the first gesture 152 in the original culture through the rule-based engine 114. The rule-based engine 114 may use linguistic databases, expert-defined rules, ML models, contextual adaptation techniques, or a combination thereof, to catalog cultural norms and to identify a meaning of a gesture. For example, the rule-based engine 114 may use Gesture Database, Ekman's Emotion and Gesture Studies, or any other language-specific corpora that defines common body language patterns. The rule-based engine 114 may be further refined by crowdsourced user feedback by having a user annotate and validate gesture-speech pairings. In an exemplary embodiment, the rule-based engine 114 receives as an input the first gesture 152 and the culture related to the target language. The rule-based engine 114 determines the meaning for the first gesture 152 in the culture related to the target language by identifying predefined cultural norms based on the culture related to the target language.

The system 100 determines if the first gesture 152 has a different meaning between the original culture and the culture related to the target language. The system 100 determines the culture related to the target language based on geographical region, user preferences, content metadata, and linguistic variations. When a language is spoken across multiple cultures, such as English, the system 100 may select the most relevant cultural adaptation using a hierarchical decision process. For example, the system 100 may use geographical metadata embedded in the source video, such as location tags or user-defined settings, to help determine the intended audience. If no explicit geographical metadata is available, the system 100 uses linguistic markers, such as regional dialects, pronunciation styles, or vocabulary differences in a multimedia asset, to infer the cultural context. Also, a user or a content creator may specify a preferred cultural adaptation, so the system will prioritize the selected culture for determining a meaning of gestures. If the cultural context remains ambiguous, the system 100 may employ use default settings for determining the culture related to the target language based on the content type of the multimedia asset. For example, if the multimedia asset is shared globally, the system 100 may select the most neutral or widely accepted cultural adaptation, ensuring that gestures and speech patterns remain understandable to a broad audience. However, for region-specific content, the system 100 may prioritize the dominant cultural norms of that region. Referring to the example of the individual shaking his head, the rule-based engine 114 identifies a culture related to the target language and determines that when an individual shakes their head, the gesture means the individual is agreeing in the culture related to the target language. In an exemplary embodiment, the rule-based engine 114 outputs the meaning of the first gesture 152 in the original culture and the meaning of the first gesture 152 in the culture related to the target language to the gesture synthesis model 118. The gesture recognition engine 108 outputs the first gesture 152 to the gesture synthesis model 118. In an exemplary embodiment, the gesture synthesis model 118 compares the meanings of the first gesture 152 in the original culture compared to the meaning of the first gesture 152 in the culture related to the target language. In one embodiment, if there is not a difference between the meanings of the gestures, then the method 400 proceeds back to block 212 in Figure 2 with the first gesture 152. That is, the method 400 does not change the gesture.

If there is a difference between the meaning of the first gesture 152 in the original culture compared to the culture related to the target language, then the method 400 proceeds to block 408. In an exemplary embodiment, the gesture synthesis model 118 generates a translated gesture based on the first gesture 152 using, e.g., a generative ML model such as GANs or VAEs. The gesture synthesis model 118 inputs into the generative ML model the first gesture 152 and a gesture in the culture related to the target language that matches the meaning of the original culture to generate the translated gesture. In an exemplary embodiment, the gesture synthesis model 118 outputs the generated translated gesture to the motion synchronization model 120. The motion synchronization model 120 synchronizes the translated gesture with the video segment from the video processing engine 106 by replacing the first gesture 152 in the video segment with the translated gesture. The original gesture is replaced in the video segment by replacing an individual in the original video segment with the individual depicting the translated gesture. In an exemplary embodiment, the motion synchronization model 120 synchronizes the translated gesture with the video segment from the video processing engine 106 by adding an avatar in the video segment depicting the translated gesture as described above.

Figure 6 depicts a flowchart for generating translated lip movements. At block 602, the system 100 receives a translated audio segment. In an exemplary embodiment, the translated audio segment is generated by the TTS engine 116 based on an audio segment from the video processing engine 106. In an exemplary embodiment, block 602 is performed after the block 208 of the method 200.

At block 604, the system 100 generates translated lip movements based on the translated audio segment. In an exemplary embodiment, the TTS engine 116 outputs the translated audio segment to a generative ML model, such as First Order Motion Model, to create lip movements that match the translated audio segment. After generating the lip movements that match the translated audio segment, the original lip movements may be cut out of the video segment and replaced with the translated lip movements. In an exemplary embodiment, the generative ML model receives as input the translated audio segment and the translated language. In an exemplary embodiment, the generative ML model may receive as an input the lip movements in the original video segment. By receiving the lip movements of the original video segment, the generative ML model can maintain the individual's demeanor between the original lip movements and the translated lip movements. In an exemplary embodiment, method 600 is performed simultaneously with at least one of: the method 200 or the method 400. For example, the system 100 may generate translated lip movements and determine a temporal alignment between a translated audio segment and a first gesture. In another example, the system 100 may generate translated lip movement and generate a translated gesture.

At block 606, the system 100 inserts the translated lip movements into the multimedia asset. In an exemplary embodiment, the generative ML model outputs the translated lip movements to the motion synchronization model 120 with the multimedia asset input into the video processing engine 106. The motion synchronization model 120 replaces the lip movements in the multimedia asset with the translated lip movements.

In the current disclosure, reference is made to various embodiments. However, it should be understood that the present disclosure is not limited to specific embodiments described. Instead, any combination of the following features and elements, whether related to different embodiments or not, is contemplated to implement and practice the teachings provided herein. Additionally, when elements of the embodiments are described in the form of "at least one of A and B," it will be understood that embodiments including element A exclusively, including element B exclusively, and including element A and B are each contemplated. Furthermore, although some embodiments may achieve advantages over other possible solutions or over the prior art, whether or not a particular advantage is achieved by a given embodiment is not limiting of the present disclosure. Thus, the aspects, features, embodiments and advantages disclosed herein are merely illustrative and are not considered elements or limitations of the appended claims except where explicitly recited in a claim(s). Likewise, reference to "the invention" shall not be construed as a generalization of any inventive subject matter disclosed herein and shall not be considered to be an element or limitation of the appended claims except where explicitly recited in a claim(s).

As will be appreciated by one skilled in the art, embodiments described herein may be embodied as a system, method or computer program product. Accordingly, embodiments may take the form of an entirely hardware embodiment, an entirely software embodiment (including firmware, resident software, micro-code, etc.) or an embodiment combining software and hardware aspects that may all generally be referred to herein as a "circuit," "module" or "system." Furthermore, embodiments described herein may take the form of a computer program product embodied in one or more computer readable medium(s) having computer readable program code embodied thereon.

Program code embodied on a computer readable medium may be transmitted using any appropriate medium, including but not limited to wireless, wireline, optical fiber cable, RF, etc., or any suitable combination of the foregoing.

Computer program code for carrying out operations for embodiments of the present disclosure may be written in any combination of one or more programming languages, including an object-oriented programming language such as Java, Smalltalk, C++ or the like and conventional procedural programming languages, such as the "C" programming language or similar programming languages. The program code may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider).

Aspects of the present disclosure are described herein with reference to flowchart illustrations or block diagrams of methods, apparatuses (systems), and computer program products according to embodiments of the present disclosure. It will be understood that each block of the flowchart illustrations or block diagrams, and combinations of blocks in the flowchart illustrations or block diagrams, can be implemented by computer program instructions. These computer program instructions may be provided to a processor of a general purpose computer, special purpose computer, or other programmable data processing apparatus to produce a machine, such that the instructions, which execute via the processor of the computer or other programmable data processing apparatus, create means for implementing the functions/acts specified in the block(s) of the flowchart illustrations or block diagrams.

These computer program instructions may also be stored in a computer readable medium that can direct a computer, other programmable data processing apparatus, or other device to function in a particular manner, such that the instructions stored in the computer readable medium produce an article of manufacture including instructions which implement the function/act specified in the block(s) of the flowchart illustrations or block diagrams.

The computer program instructions may also be loaded onto a computer, other programmable data processing apparatus, or other device to cause a series of operational steps to be performed on the computer, other programmable apparatus or other device to produce a computer implemented process such that the instructions which execute on the computer, other programmable data processing apparatus, or other device provide processes for implementing the functions/acts specified in the block(s) of the flowchart illustrations or block diagrams.

The flowchart illustrations and block diagrams in the Figures illustrate the architecture, functionality, and operation of possible implementations of systems, methods, and computer program products according to various embodiments of the present disclosure. In this regard, each block in the flowchart illustrations or block diagrams may represent a module, segment, or portion of code, which comprises one or more executable instructions for implementing the specified logical function(s). It should also be noted that, in some alternative implementations, the functions noted in the block may occur out of the order noted in the Figures. For example, two blocks shown in succession may, in fact, be executed substantially concurrently, or the blocks may sometimes be executed in the reverse order or out of order, depending upon the functionality involved. It will also be noted that each block of the block diagrams or flowchart illustrations, and combinations of blocks in the block diagrams or flowchart illustrations, can be implemented by special purpose hardware-based systems that perform the specified functions or acts, or combinations of special purpose hardware and computer instructions.

While the foregoing is directed to embodiments of the present disclosure, other and further embodiments of the disclosure may be devised without departing from the basic scope thereof, and the scope thereof is determined by the claims that follow.

Example 1 is a method, comprising: accessing a multimedia asset depicting an individual speaking in a first language of a plurality of languages; extracting an audio segment of the individual speaking in the multimedia asset; identifying a first gesture depicted in the multimedia asset during a first portion of the audio segment; determining a first temporal alignment between an utterance made in the first portion of the audio segment and the first gesture; and generating a synchronized multimedia asset based on at least one of: modifying a temporal location of the first gesture in the multimedia asset or modifying a timing of a translated audio segment to set a second temporal alignment between the first gesture and a translation of the utterance in the translated audio segment.

In Example 2, the method of Example 1 further comprises: identifying a meaning of the first gesture with respect to the first language based on a first language ontology; identifying a translated gesture having a meaning that matches the first gesture with respect to a target language based on a target language ontology; and modifying the multimedia asset to depict the translated gesture while maintaining the first temporal alignment.

In Example 3, modifying the multimedia asset to depict the translated gesture of Example 2 comprises processing the multimedia asset using a generative machine learning model to generate the synchronized multimedia asset, and the synchronized multimedia asset depicts the individual performing the translated gesture.

In Example 4, modifying the multimedia asset to depict the translated gesture of Example 2 comprises: generating an avatar performing the translated gesture; and adding the avatar to the synchronized multimedia asset.

In Example 5, generating the synchronized multimedia asset based on modifying the timing of the translated audio segment of Example 1 comprises aligning the first gesture with the translated audio segment such that the first gesture, performed during the first portion of the audio segment, is performed during a corresponding portion of the translated audio segment.

In Example 6, the method of Example 1 further comprises segmenting the multimedia asset into a plurality of video segments.

In Example 7, the first portion of the audio segment of Example 1 is a syllable, word, or phrase.

In Example 8, the method of Example 1 further comprises generating translated lip movement of the individual to align with the translated audio segment and adding the translated lip movement of the individual to the synchronized multimedia asset.

In Example 9, the translated lip movement of Example 8 is based on original lip movement in the first portion of the audio segment.

Example 10 is a method comprising: accessing a multimedia asset depicting an individual from a first culture; identifying a first gesture made by the individual in the multimedia asset; determining a second gesture in a second culture having a meaning that matches the meaning of the first gesture in the first culture, wherein the first and second gestures are different; and adding the second gesture to the multimedia asset to modify the multimedia asset to reflect the second culture.

In Example 11, adding the second gesture to the multimedia asset of Example 10 comprises replacing the first gesture made by the individual with the second gesture in the multimedia asset.

In Example 12, adding the second gesture to the multimedia asset of Example 10 comprises generating an avatar performing the second gesture; and adding the avatar to the modified multimedia asset.

In Example 13, adding the second gesture to the multimedia asset of Example 10 comprises identifying a second language related to the second culture that is different from a first language of the first culture; and replacing audio of the multimedia asset in the first language with audio in the second language.

In Example 14, determining the second gesture of Example 13 comprises identifying a translated gesture having a meaning that matches the first gesture with respect to the second language based on a second language ontology.

In Example 15, replacing the audio of the multimedia asset of Example 13 comprises generating a transcript of the audio of the multimedia asset; translating the transcript of the audio to the second language from the first language; and generating, using a generative machine learning model, translated audio of the multimedia asset.

Example 16 is a system comprising: one or more computer processors; and a memory containing a program which when executed by the computer processors performs an operation comprising: accessing a multimedia asset depicting an individual speaking in a first language of a plurality of languages; extracting an audio segment of the individual speaking in the multimedia asset; identifying a first gesture depicted in the multimedia asset during a first portion of the audio segment; determining a first temporal alignment between an utterance made in the first portion of the audio segment and the first gesture; and generating a synchronized multimedia asset based on at least one of: modifying a temporal location of the first gesture in the multimedia asset or modifying a timing of a translated audio segment to set a second temporal alignment between the first gesture and a translation of the utterance in the translated audio segment.

In Example 17, the system of Example 16 further comprises identifying a meaning of the first gesture with respect to the first language based on a first language ontology; identifying a translated gesture having a meaning that matches the first gesture with respect to a target language based on a target language ontology; and modifying the multimedia asset to depict the translated gesture while maintaining the first temporal alignment.

In Example 18, modifying the multimedia asset to depict the translated gesture of Example 17 comprises processing the multimedia asset using a generative machine learning model to generate the synchronized multimedia asset, and the synchronized multimedia asset depicts the individual performing the translated gesture.

In Example 19, modifying the multimedia asset to depict the translated gesture of Example 17 comprises generating an avatar performing the translated gesture; and adding the avatar to the synchronized multimedia asset.

In Example 20, the system of Example 16 further comprises generating translated lip movement of the individual to align with the translated audio segment and adding the translated lip movement of the individual to the synchronized multimedia asset.

## Claims

1. A method, comprising:
accessing a multimedia asset depicting an individual speaking in a first language of a plurality of languages;
extracting an audio segment of the individual speaking in the multimedia asset;
identifying a first gesture depicted in the multimedia asset during a first portion of the audio segment;
determining a first temporal alignment between an utterance made in the first portion of the audio segment and the first gesture; and
generating a synchronized multimedia asset based on at least one of: modifying a temporal location of the first gesture in the multimedia asset or modifying a timing of a translated audio segment to set a second temporal alignment between the first gesture and a translation of the utterance in the translated audio segment.

2. The method of claim 1, further comprising:
identifying a meaning of the first gesture with respect to the first language based on a first language ontology;
identifying a translated gesture having a meaning that matches the first gesture with respect to a target language based on a target language ontology; and
modifying the multimedia asset to depict the translated gesture while maintaining the first temporal alignment.

3. The method of claim 2, wherein modifying the multimedia asset to depict the translated gesture comprises:
processing the multimedia asset using a generative machine learning model to generate the synchronized multimedia asset, and the synchronized multimedia asset depicts the individual performing the translated gesture.

4. The method of any one of claims 2 or 3, wherein modifying the multimedia asset to depict the translated gesture comprises:
generating an avatar performing the translated gesture; and
adding the avatar to the synchronized multimedia asset.

5. The method of any one of the preceding claims, wherein generating the synchronized multimedia asset based on modifying the timing of the translated audio segment comprises aligning the first gesture with the translated audio segment such that the first gesture, performed during the first portion of the audio segment, is performed during a corresponding portion of the translated audio segment.

6. The method of any one of the preceding claims, further comprising:
segmenting the multimedia asset into a plurality of video segments.

7. The method of any one of the preceding claims, wherein the first portion of the audio segment is a syllable, word, or phrase.

8. The method of any one of the preceding claims, further comprising:
generating translated lip movement of the individual to align with the translated audio segment and adding the translated lip movement of the individual to the synchronized multimedia asset.

9. The method of claim 8, wherein the translated lip movement is based on original lip movement in the first portion of the audio segment.

10. A system comprising:
one or more computer processors; and
a memory containing a program which when executed by the computer processors performs an operation comprising:
accessing a multimedia asset depicting an individual speaking in a first language of a plurality of languages;
extracting an audio segment of the individual speaking in the multimedia asset;
identifying a first gesture depicted in the multimedia asset during a first portion of the audio segment;
determining a first temporal alignment between an utterance made in the first portion of the audio segment and the first gesture; and
generating a synchronized multimedia asset based on at least one of: modifying a temporal location of the first gesture in the multimedia asset or modifying a timing of a translated audio segment to set a second temporal alignment between the first gesture and a translation of the utterance in the translated audio segment.

11. The system of claim 10, further comprising:
identifying a meaning of the first gesture with respect to the first language based on a first language ontology;
identifying a translated gesture having a meaning that matches the first gesture with respect to a target language based on a target language ontology; and
modifying the multimedia asset to depict the translated gesture while maintaining the first temporal alignment.

12. The system of claim 11, wherein modifying the multimedia asset to depict the translated gesture comprises:
processing the multimedia asset using a generative machine learning model to generate the synchronized multimedia asset, and the synchronized multimedia asset depicts the individual performing the translated gesture.

13. The system of any one of claims 11 or 12, wherein modifying the multimedia asset to depict the translated gesture comprises:
generating an avatar performing the translated gesture; and
adding the avatar to the synchronized multimedia asset.

14. The system of any one of claims 10 to 13, further comprising:
generating translated lip movement of the individual to align with the translated audio segment and adding the translated lip movement of the individual to the synchronized multimedia asset.

15. The system of claim 14, wherein the translated lip movement is based on original lip movement in the first portion of the audio segment.
